# EUROPÄISCHE PATENTSCHRIFT

(11) **EP 4 415 891 B1**
(45) Veröffentlichungstag und Bekanntmachung des Hinweises auf die Patenterteilung: **06.08.2025**
(21) Anmeldenummer: 22798143.8
(22) Anmeldetag: 06.10.2022
(51) Int. Cl.: B06B 3/00

(54) **ULTRASCHALLSCHWINGSYSTEM MIT MECHANISCHEM RESONATOR**
ULTRASONIC VIBRATION SYSTEM COMPRISING A MECHANICAL RESONATOR
SYSTÈME DE VIBRATION ULTRASONORE COMPRENANT UN RÉSONATEUR MÉCANIQUE

(30) Priorität: 14.10.2021 DE 102021126665
(43) Veröffentlichungstag der Anmeldung: 21.08.2024
(73) Patentinhaber: Herrmann Ultraschalltechnik GmbH & Co. KG, 76307 Karlsbad (DE)
(72) Erfinder: BROUET, Francois, 75334 Straubenhardt (DE); ZENDLER, Stefan, 75334 Straubenhardt (DE); PORTJE, Volker, 76307 Ittersbach (DE); VOGLER, Ulrich, 88690 Uhldingen-Mühlhofen (DE)
(74) Vertreter: WSL Patentanwälte Partnerschaft mbB
(86) Internationale Anmeldenummer: PCT/EP2022/077780
(87) Internationale Veröffentlichungsnummer: WO 2023/061839

(56) Entgegenhaltungen:
- EP-A1- 2 881 184
- DE-A1- 102004 022 509
- DE-A1- 102018 132 840

## Beschreibung

Die vorliegende Erfindung betrifft ein Ultraschallschwingsystem mit einem Konverter, welcher eine elektrische Wechselspannung in eine mechanische Schwingung umwandeln kann, und einer Sonotrode der Masse mₛ, die dafür vorgesehen ist, mit der mechanischen Schwingung in Schwingung versetzt zu werden, wobei der Konverter derart mit der Sonotrode gekoppelt ist, dass die vom Konverter erzeugte Schwingung eine Schwingungsanregung der Sonotrode erzeugt, wobei das Ultraschallschwingsystem dafür vorgesehen ist, mit einer Schwingung der Wellenlänge λ betrieben zu werden.

Solche Ultraschallschwingsysteme sind bekannt. Die mit der Ultraschallschwingung der Wellenlänge λ angeregte Sonotrode wird zur Bearbeitung von Materialien verwendet, indem die Sonotrode mit den zu bearbeitenden Materialien in Kontakt tritt und diese an ihren Grenzflächen mit einer Ultraschallschwingung anregt, sodass lokal Wärme erzeugt werden kann. In der Regel ist das zu bearbeitende Material zwischen der Sonotrode und einem Gegenwerkzeug, auch Amboss genannt, angeordnet.

Die Sonotrode weist hierzu eine sogenannte Siegelfläche auf, die dafür vorgesehen ist, mit dem zu bearbeitenden Material in Kontakt zu treten. Die Form der Sonotrode ist meist derart angepasst, dass die Siegelfläche über ihre gesamte Länge und Breite mit einer möglichst konstanten Schwingungsamplitude schwingt, um über die gesamte Siegelfläche möglichst gleichmäßig eine Ultraschallschwingung auf das zu bearbeitende Material aufzubringen.

Immer dann, wenn die Siegelfläche mit dem zu bearbeitenden Material in Kontakt tritt, wird mehr oder weniger abrupt eine Kraft auf die Sonotrode ausgeübt, sodass unerwünschte Schwingungsmoden, die sich beispielsweise durch die spezielle Form der Sonotrode ergeben, mit angeregt werden. Auch können Unebenheiten des zu bearbeitenden Materials dazu führen, dass das Material entlang der Siegelfläche ungleichmäßig eine Gegenkraft auf die Sonotrode ausübt, so dass z. B. eine Biegeschwingung angeregt oder die eigentlich gewünschte Schwingform verzerrt wird. Dies ist insbesondere bei Anwendungsfällen ausgeprägt, bei denen ein eher hartes Material, wie z.B. Metall, mit einer an einer Mantelfläche angeordneten Siegelfläche bearbeitet wird.

Diese Schwingformverzerrung kann sich negativ auf die eigentlich gewünschte longitudinale Schwingung auswirken, sodass es zu Phasenverschiebungen und unter Umständen zu ungleichmäßigen Bewegungen entlang der longitudinalen Richtung kommt. Diese unerwünschten Schwingungsbewegungen werden auf den Konverter und damit auf die im Allgemeinen im Konverter angeordneten Piezokeramiken übertragen. Diese sind jedoch nicht auf Dauer in der Lage, solche Schwingungen aufzunehmen. Im Ergebnis erhöht sich die Temperatur der Piezokeramiken aufgrund deren Überbeanspruchung, wodurch die Einsatzzeit reduziert wird.

Es ist daher bereits üblich, die Schweißzeit zu begrenzen oder längere Pausen zwischen einzelnen Schweißbearbeitungen einzulegen, um den Piezokeramiken Gelegenheit zu geben, sich wieder abzukühlen. Darüber hinaus sind mehr oder minder komplizierte Kühlvorrichtungen vorgesehen, um die Schweißzeit der Piezokeramik zu erhöhen. Dennoch kann es zu Defekten in der Keramik der Piezoelemente kommen, wodurch die Lebensdauer reduziert wird. Im schlimmsten Fall kann es zu einem Bruch der Piezokeramik kommen.

DE 10 2018 132840 beschreibt ein Ultraschallschwingsystem mit einem Konverter und einer Sonotrode, wobei die vom Konverter erzeugte Schwingung eine Schwingungsanregung der Sonotrode erzeugt.

Ausgehend von dem beschriebenen Stand der Technik ist es daher Aufgabe der vorliegenden Erfindung, ein Ultraschallschwingsystem bereitzustellen, bei dem die geschilderten Probleme zumindest reduziert sind.

Erfindungsgemäß wird diese Aufgabe dadurch gelöst, dass das Ultraschallschwingsystem einen mechanischen Resonator der Masse mᵣ aufweist, welcher mit einer Schwingung mit der Wellenlänge λ in Resonanzschwingung gebracht werden kann, wobei die Masse mᵣ des Resonators größer als die Masse mₛ der Sonotrode ist.

Unter einem mechanischen Resonator wird ein schwingfähiges System verstanden, welches derart auf eine Frequenz und gegebenenfalls deren Vielfache abgestimmt ist, sodass das System im Wesentlichen nur mit diesen Frequenzen schwingt, während Anregungen mit anderen Frequenzen stark abgeschwächt werden. Vorzugsweise ist der Resonator als schwingender Körper ausgebildet.

Dadurch, dass die Masse mᵣ des mechanischen Resonators relativ groß ist, werden Verzerrungen der gewünschten Schwingungsform erheblich abgeschwächt.

In einer bevorzugten Ausführungsform ist die Masse mᵣ des Resonators um mindestens 100%, vorzugsweise um mindestens 150% und besonders bevorzugt um mindestens 200% größer als die Masse mₛ der Sonotrode.

Dabei ist es besonders bevorzugt, wenn der mechanische Resonator zwischen Konverter und Sonotrode angeordnet ist. Eventuell aufgrund der Berührung zwischen Sonotrode einerseits und zu bearbeitendem Material andererseits in das System eingekoppelte unerwünschte Schwingungen werden daher von der Sonotrode zunächst auf den mechanischen Resonator übertragen, welcher diese nicht gewünschten Schwingungen praktisch vollständig tilgt, sodass nahezu keine unerwünschten Schwingungen auf den Konverter und die darin enthaltenen Piezoelemente übertragen werden. Allein die Ankopplung des mechanischen Resonators an das Schwingsystem sorgt allerdings bereits dafür, dass die Schwingungsform des gesamten Schwingsystems näher an der gewünschten Schwingungsform bleibt.

In vielen Fällen wird ein Amplitudentransformator der Masse mₐ zwischen Konverter und Sonotrode verwendet, welcher die Amplitude der Ultraschallschwingung - nicht jedoch die Frequenz - der Schwingung verändert. Dadurch kann die Amplitude einer vom Konverter erzeugten Schwingung skaliert (meistens vergrößert aber auch verkleinert) werden, bevor die Schwingung in die Sonotrode eingekoppelt wird.

Wird ein solcher Amplitudentransformator verwendet, kann der mechanische Resonator entweder zwischen Amplitudentransformator und Sonotrode oder zwischen Amplitudentransformator und Konverter angeordnet werden, wobei letzteres besonders bevorzugt ist. Auch über den Amplitudentransformator können unerwünschte Schwingungsmoden in das System eingekoppelt werden, sodass die Anordnung des mechanischen Resonators zwischen Amplitudentransformator und Konverter auch diese entsprechend filtert.

Die Transformationseigenschaften des Amplitudentransformators sorgen meist zudem dafür, dass die Schwingungsamplitude der über die Sonotrode in das System eingekoppelten, unerwünschten Schwingungen nur reduziert an den mechanischen Resonator weitergegeben werden.

In einer weiteren bevorzugten Ausführungsform ist die Masse mᵣ des Resonators größer als die Summe aus der Masse mₛ der Sonotrode und der Masse mₐ des Amplitudentransformators ist.

Durch die vergleichsweise große Masse des mechanischen Resonators werden unerwünschte Schwingungsanteile stärker gefiltert bzw. abgeschwächt.

Es ist allerdings auch möglich, den Amplitudentransformator als mechanischen Resonator im Sinne der vorliegenden Erfindung auszubilden. In solch einem Fall ist kein zusätzliches Bauteil notwendig. Stattdessen wird die Masse des Amplitudentransformators vergrößert. Da allerdings nicht selten eine Halterung am Amplitudentransformator vorgesehen ist, muss dann auch die entsprechende Halterungsaufnahme aufgrund der größeren Dimension des Amplitudentransformators geändert werden, was jedoch aus Platzgründen nicht in allen Anwendungsfällen möglich sein dürfte.

Der mechanische Resonator hat in einer bevorzugten Ausführungsform eine Länge von λ/2 oder ein Vielfaches hiervon. In diesen Fällen kann der mechanische Resonator effektiv mit der Wellenlänge λ in Resonanzschwingung gebracht werden.

In einer weiteren bevorzugten Ausführungsform hat der mechanische Resonator eine Länge l und kann mit einer entlang der Länge l orientierten Longitudinalschwingung mit der Wellenlänge λ in Resonanzschwingung gebracht werden. In einer bevorzugten Ausführungsform hat der mechanische Resonator entlang mindestens 80% seiner Länge l einen gleichbleibenden Querschnitt, wobei besonders bevorzugt der mechanische Resonator entlang mindestens 95% seiner Länge einen gleichbleibenden Querschnitt hat. Am besten hat der mechanische Resonator über seine gesamte Länge einen gleichbleibenden Querschnitt.

Alternativ dazu kann der mechanische Resonator auch zwei Abschnitte mit unterschiedlichen Querschnitten aufweisen, die jeweils entlang mindestens 25 % der Länge l einen gleichbleibenden Querschnitt aufweisen. In diesem Fall bewirkt der mechanische Resonators nicht nur eine Filterung bzw. Abschwächung von Verzerrungsanteilen der gewünschten Schwingungsform, sondern sorgt zusätzlich für eine Amplitudentransformation. Dieser mechanische Resonator kann zusätzlich zu einem bestehenden Amplitudentransformator verwendet werden oder diesen vollständig ersetzen.

Durch diese Formen ist sichergestellt, dass andere Schwingungsmoden sehr effektiv abgeschwächt bzw. ausgefiltert werden.

In einer weiteren bevorzugten Ausführungsform hat der mechanische Resonator eine Querschnittsfläche, die rotationssymmetrisch ist, wobei vorzugsweise die Querschnittsfläche kreisförmig ist. Beispielsweise kann der mechanische Resonator die Form eines Zylinders haben.

In einer weiteren besonders bevorzugten Ausführungsform hat der mechanische Resonator eine durchschnittliche Querschnittsfläche Q und eine Länge l, wobei *Q* > 0,5*l*², vorzugsweise *Q* > *l*² und am besten *Q* > 1,5*l*². Es hat sich gezeigt, dass die große durchschnittliche Querschnittsfläche (in einer Schnittansicht senkrecht zur Länge I) unerwünschte Schwingung sehr effektiv herausfiltern kann.

Deutlich größere Querschnittsflächen bringen keinen zusätzlichen Effekt, so dass in einer weiteren bevorzugten Ausführungsform *Q* < 5*l*², vorzugsweise *Q* < 3*l*² und am besten *Q* < 2*l*² ist.

In einer weiteren bevorzugten Ausführungsform ist der Konverter als der mechanische Resonators ausgebildet. Die große Masse mᵣ wird somit von dem Konverter zur Verfügung gestellt, sodass in diesem Fall ebenfalls auf ein zusätzliches Bauteil verzichtet werden kann.

Besonders bevorzugt wird ein solches Ultraschallschwingsystem zum Schweißen von Metall verwendet.

Weitere Vorteile, Merkmale und Anwendungsmöglichkeiten der vorliegenden Erfindung werden deutlich anhand der folgenden Beschreibung einer bevorzugten Ausführungsform und der zugehörigen Figuren. Es zeigen:
Figur 1 eine Seitenansicht auf eine Ausführungsform der Erfindung,

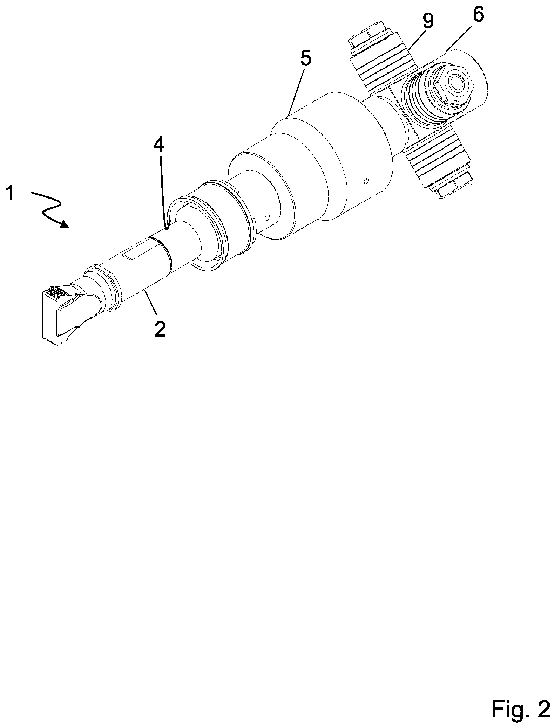

Figur 2 eine perspektivische Ansicht auf die Ausführungsform der Erfindung von Figur 1.

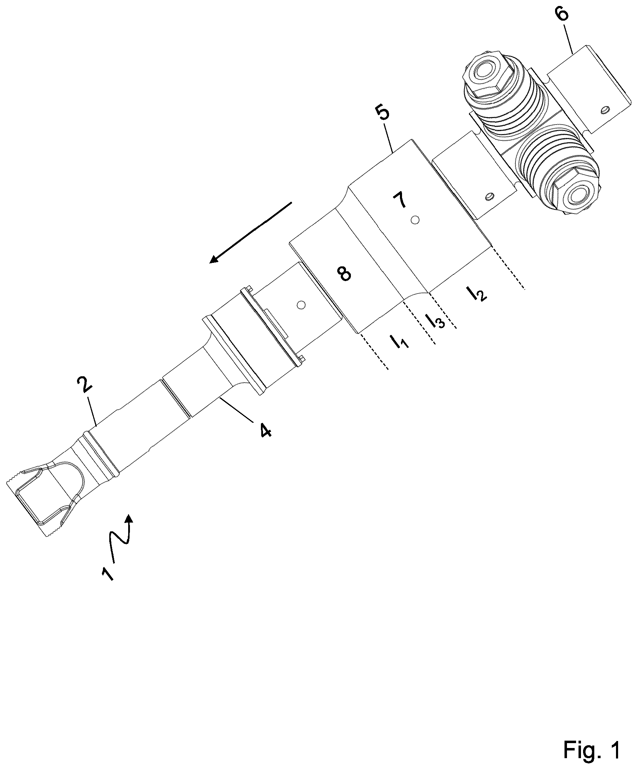

In Figur 1 ist eine Ausführungsform der Erfindung gezeigt. Das Ultraschallschwingsystem 1 weist eine Sonotrode 2 auf, die eine erste und eine zweite Stirnfläche, wobei die Stirnflächen gegenüberliegend angeordnet sind, und eine umlaufende, die beiden Stirnflächen verbindenden Mantelfläche aufweist.

Weiterhin ist ein Konverter 6 vorgesehen, welcher eine Vielzahl, nämlich 4, Piezokristallstapel 9 aufweist, welche alle senkrecht zur Längsrichtung der Ultraschallschwingeinheit 1 orientiert sind. Diese Piezokristallstapel 9 wandeln eine elektrische Wechselspannung in eine mechanische Schwingung um. Aufgrund der sternförmigen Anordnung der vier Piezokristallstapel 9 wird im Ultraschallschwingungssystem 1 in Längsrichtung, welche in Figur 1 durch einen Pfeil markiert ist, eine longitudinale Ultraschallschwingung angeregt.

An der ersten Stirnfläche der Sonotrode 2 ist ein Amplitudentransformator 4 angeordnet, welcher die Schwingungsamplitude der in Figur 1 von rechts in das System eingekoppelten Schwingung vergrößert und an die Sonotrode 2 abgibt.

Die Sonotrode 2 ist dafür vorgesehen, ein Material, nämlich im gezeigten Beispiel eine Metalllitze zu schweißen. Zu diesem Zweck hat die Sonotrode 2 eine auf der Mantelfläche angeordnete Siegelfläche, die mit der Metalllitze in Kontakt treten kann. Die Siegelfläche ist an einem der zweiten Stirnfläche zugewandten Abschnitt der Mantelfläche angeordnet.

Zwischen Amplitudentransformator 4 und Konverter 6 ist ein mechanischer Resonator 5 angeordnet, der hier aus einem zylinderförmigen Element besteht. Die Länge l des mechanischen Resonators 5 entspricht der halben Wellenlänge λ der Anregungsschwingung, die der Konverter 6 erzeugt. Die vom Konverter 6 erzeugte Schwingung der Wellenlänge λ wird von dem mechanischen Resonator 5 auf den Amplitudentransformator 4 übertragen, welcher die Amplitude transformiert bzw. in diesem Fall vergrößert und auf die Sonotrode 2 überträgt. Der mechanische Resonator 5 weist zwei Abschnitte 7,8 auf, welche jeweils einen konstanten Durchmesser aufweisen, wobei jedoch der Durchmesser des Abschnittes 7, der näher am Konverter 6 angeordnet ist, größer ist als der Durchmesser des Abschnittes 8, der näher am Amplitudentransformator 4 angeordnet ist. Der Abschnitt 8 weist eine Länge l₁ auf und der Abschnitt 7 weist eine Länge l₂ auf. Zwischen den Abschnitten 7 und 8 ist ein Übergangsabschnitt angeordnet, welche eine Länge l₃ aufweist. Die Länge des mechanischen Resonators 5 setzt sich somit aus den Längen l₁, l₂ und l₃ (l = l₁ + l₂ + l₃) zusammen. Diese Ausführungsform hat den Vorteil, dass der mechanische Resonator 5 zusätzlich eine Amplitudentransformation durchführt.

Aufgrund der Berührung der Sonotrode 2 mit der Metalllitze 3 kommt es zur Anregung von weiteren Schwingungsmoden oder zu Verzerrungen der Schwingungsform, die wiederum von der Sonotrode 2 auf den Amplitudentransformator 4 übertragen werden. Dadurch, dass zwischen dem Amplitudentransformator 4 und dem Konverter 6 der mechanische Resonator 5 der Länge l angeordnet ist, werden diese Schwingungsmoden von dem mechanischen Resonator 5 praktisch vollständig gefiltert bzw. die Verzerrungen deutlich abgeschwächt, sodass diese Schwingungen nicht auf den Konverter 6 bzw. die Piezoelemente im Konverter 6 übertragen werden.

Durch die erfindungsgemäße Anordnung eines mechanischen Resonators 5 im Ultraschallschwingsystem 1 werden störende, die Piezokristalle beeinträchtigten Schwingungen effektiv aus dem System gefiltert und so die Lebensdauer der Piezoelemente deutlich verlängert.

### Bezugszeichenliste

- 1: Ultraschallschwingsystem
- 2: Sonotrode
- 4: Amplitudentransformator
- 5,: Resonator
- 6: Konverter
- 7,8: Resonatorabschnitte
- 9: Piezokristallstapel

## Patentansprüche

1. Ultraschallschwingsystem (1) mit einem Konverter (6), welcher eine elektrische Wechselspannung in eine mechanische Schwingung umwandeln kann, und einer Sonotrode (2) der Masse mₛ, die dafür vorgesehen ist, mit der mechanischen Schwingung in Schwingung versetzt zu werden, wobei der Konverter (6) derart mit der Sonotrode (2) gekoppelt ist, dass die vom Konverter (6) erzeugte Schwingung eine Schwingungsanregung der Sonotrode (2) erzeugt, wobei das Ultraschallschwingsystem (1) dafür vorgesehen ist, mit einer Schwingung der Wellenlänge λ betrieben zu werden, wobei das Ultraschallschwingsystem einen mechanischen Resonator (5) der Masse m, aufweist, welcher mit einer Schwingung mit der Wellenlänge λ in Resonanzschwingung gebracht werden kann, **dadurch gekennzeichnet, dass** die Masse mᵣ des Resonators (5) größer als die Masse mₛ der Sonotrode (2) ist.

2. Ultraschallschwingsystem (1) nach Anspruch 1, **dadurch gekennzeichnet, dass** die Masse m, des Resonators (5) um mindestens 100%, vorzugsweise um mindestens 150% und besonders bevorzugt um mindestens 200% größer als die Masse mₛ der Sonotrode (2) ist.

3. Ultraschallschwingsystem (1) nach Anspruch 1 oder 2, **dadurch gekennzeichnet, dass** der mechanische Resonator (5) zwischen Konverter (6) und Sonotrode (2) angeordnet ist.

4. Ultraschallschwingsystem (1) nach einem der Ansprüche 1 bis 3, **dadurch gekennzeichnet, dass** ein Amplitudentransformator (4) der Masse mₐ zwischen Konverter (6) und Sonotrode (2) angeordnet ist, wobei vorzugsweise der mechanische Resonator (5) zwischen Konverter (6) und Amplitudentransformator (4) angeordnet ist.

5. Ultraschallschwingsystem (1) nach Anspruch 4, **dadurch gekennzeichnet, dass** die Masse m, des Resonators (5) größer als die Summe aus der Masse mₛ der Sonotrode (2) und der Masse mₐ des Amplitudentransformators (4) ist.

6. Ultraschallschwingsystem (1) nach einem der Ansprüche 1 bis 3, **dadurch gekennzeichnet, dass** der Amplitudentransformator als der mechanische Resonator ausgebildet ist.

7. Ultraschallschwingsystem (1) nach einem der Ansprüche 1 bis 6, **dadurch gekennzeichnet, dass** der mechanische Resonator (5) eine Länge l von n λ/2 hat, wobei n eine natürliche Zahl ist, wobei vorzugsweise n=1 ist.

8. Ultraschallschwingsystem (1) nach einem der Ansprüche 1 bis 7, **dadurch gekennzeichnet, dass** der mechanische Resonator (5) eine Länge l hat und mit einer entlang der Länge l orientierten Longitudinalschwingung mit der Wellenlänge λ in Resonanzschwingung gebracht werden kann, wobei der mechanische Resonator (5) entlang mindestens 80% seiner Länge einen gleichbleibenden Querschnitt hat oder der mechanische Resonator zwei Abschnitte mit unterschiedlichen Querschnitten aufweist, die jeweils entlang mindestens 35% der Länge l einen gleichbleibenden Querschnitt aufweisen.

9. Ultraschallschwingsystem (1) nach einem der Ansprüche 1 bis 8, **dadurch gekennzeichnet, dass** der mechanische Resonator (5) eine Querschnittsfläche hat, die rotationssymmetrisch ist, wobei vorzugweise die Querschnittsfläche kreisförmig ist.

10. Ultraschallschwingsystem (1) nach Anspruch 9, **dadurch gekennzeichnet, dass** der mechanische Resonator (5) die Form eines Zylinders hat.

11. Ultraschallschwingsystem nach einem der Ansprüche 1 bis 10, **dadurch gekennzeichnet, dass** der mechanische Resonator (5) eine durchschnittliche Querschnittsfläche Q und eine Länge I aufweist, wobei *Q* > 0,5*l*², vorzugsweise *Q > l*² und am besten *Q* > 1,5*l*².

12. Ultraschallschwingsystem nach Anspruch 11, **dadurch gekennzeichnet, dass** *Q* < 5*l*², vorzugsweise *Q* < 3*l*² und am besten *Q <* 2*l*².

13. Ultraschallschwingsystem (1) nach einem der Ansprüche 1, 2 oder 7 bis 12, **dadurch gekennzeichnet, dass** der Konverter als der mechanische Resonator ausgebildet ist.

14. Verwendung eines Ultraschallschwingsystems (1) nach einem der vorherigen Ansprüche zum Schweißen von Metall.

## Claims

1. Ultrasonic oscillating system (1) having a converter (6) which can convert an electrical alternating voltage into a mechanical oscillation, and a sonotrode (2) of mass mₛ which is intended to be set into oscillation with the mechanical oscillation, the converter (6) being coupled to the sonotrode (2) in such a way that the oscillation generated by the converter (6) generates an oscillation excitation of the sonotrode (2), wherein the ultrasonic oscillating system (1) is intended to be operated with an oscillation of wavelength λ, wherein the ultrasonic oscillating system has a mechanical resonator (5) of mass mᵣ which can be brought into resonant oscillation with an oscillation of wavelength λ, **characterized in that** the mass mᵣ of the resonator (5) being larger than the mass mₛ of the sonotrode (2).

2. Ultrasonic oscillating system (1) according to claim 1, **characterized in that** the mass mᵣ of the resonator (5) is larger than the mass mₛ of the sonotrode (2) by at least 100%, preferably by at least 150% and particularly preferably by at least 200%.

3. Ultrasonic oscillating system (1) according to claim 1 or 2, **characterized in that** the mechanical resonator (5) is arranged between the converter (6) and the sonotrode (2).

4. Ultrasonic oscillating system (1) according to one of claims 1 to 3, **characterized in that** an amplitude transformer (4) of mass mₐ is arranged between the converter (6) and the sonotrode (2), the mechanical resonator (5) preferably being arranged between the converter (6) and the amplitude transformer (4).

5. Ultrasonic oscillating system (1) according to claim 4, **characterized in that** the mass mᵣ of the resonator (5) is larger than the sum of the mass mₛ of the sonotrode (2) and the mass mₐ of the amplitude transformer (4).

6. Ultrasonic oscillating system (1) according to one of claims 1 to 3, **characterized in that** the amplitude transformer is designed as the mechanical resonator.

7. Ultrasonic oscillating system (1) according to one of claims 1 to 6, **characterized in that** the mechanical resonator (5) has a length l of n λ/2, where n is a natural number, preferably n=1.

8. Ultrasonic oscillating system (1) according to one of claims 1 to 7, **characterized in that** the mechanical resonator (5) has a length l and can be brought into resonant oscillation with a longitudinal oscillation oriented along the length l and having the wavelength λ, the mechanical resonator (5) having a constant cross-section along at least 80% of its length, or the mechanical resonator having two sections with different cross-sections, each of which has a constant cross-section along at least 35% of the length I.

9. Ultrasonic oscillating system (1) according to one of claims 1 to 8, **characterized in that** the mechanical resonator (5) has a cross-sectional area which is rotationally symmetrical, the cross-sectional area preferably being circular.

10. Ultrasonic oscillating system (1) according to claim 9, **characterized in that** the mechanical resonator (5) has the shape of a cylinder.

11. Ultrasonic oscillating system according to any one of claims 1 to 10, **characterized in that** the mechanical resonator (5) has an average cross-sectional area Q and a length l, where *Q* > 0,5*l*² preferably *Q* > *l*² and best *Q* > 1,5*l*².

12. Ultrasonic oscillating system according to claim 11, **characterized in that** *Q* < 5*l*²preferably *Q* < 3*l*² and best *Q* < 2*l*².

13. Ultrasonic oscillating system (1) according to one of claims 1, 2 or 7 to 12, **characterized in that** the converter is designed as the mechanical resonator.

14. Use of an ultrasonic oscillating system (1) according to one of the preceding claims for welding metal.

## Revendications

1. Système vibrant à ultrasons (1) comprenant un convertisseur (6) qui peut convertir une tension électrique alternative en une vibration mécanique et une sonotrode (2) de masse mₛ qui est prévue pour être mise en vibration par la vibration mécanique, le convertisseur (6) étant couplé à la sonotrode (2) de telle manière que la vibration générée par le convertisseur (6) génère une excitation de vibration de la sonotrode (2), le système vibrant à ultrasons (1) étant prévu pour fonctionner avec une vibration de longueur d'onde λ,
le système vibrant à ultrasons comprenant un résonateur mécanique (5) de masse mᵣ qui peut être mis en résonance avec une vibration de longueur d'onde λ,
**caractérisé en ce que**
la masse mᵣ du résonateur (5) est supérieure à la masse mₛ de la sonotrode (2).

2. Système vibrant à ultrasons (1) selon la revendication 1, **caractérisé en ce que** la masse mᵣ du résonateur (5) est supérieure d'au moins 100 %, de manière préférée d'au moins 150 % et de manière particulièrement préférée d'au moins 200 %, à la masse mₛ de la sonotrode (2).

3. Système vibrant à ultrasons (1) selon la revendication 1 ou 2, **caractérisé en ce que** le résonateur mécanique (5) est agencé entre le convertisseur (6) et la sonotrode (2).

4. Système vibrant à ultrasons (1) selon l'une quelconque des revendications 1 à 3, **caractérisé en ce qu'**un transformateur d'amplitude (4) de masse mₐ est agencé entre le convertisseur (6) et la sonotrode (2), le résonateur mécanique (5) étant agencé de manière préférée entre le convertisseur (6) et le transformateur d'amplitude (4).

5. Système vibrant à ultrasons (1) selon la revendication 4, **caractérisé en ce que** la masse mᵣ du résonateur (5) est supérieure à la somme de la masse mₛ de la sonotrode (2) et de la masse mₐ du transformateur d'amplitude (4).

6. Système vibrant à ultrasons (1) selon l'une quelconque des revendications 1 à 3, **caractérisé en ce que** le transformateur d'amplitude est réalisé sous la forme d'un résonateur mécanique.

7. Système vibrant à ultrasons (1) selon l'une quelconque des revendications 1 à 6, **caractérisé en ce que** le résonateur mécanique (5) a une longueur I de n λ/2, n étant un nombre naturel, de manière préférée n=1.

8. Système vibrant à ultrasons (1) selon l'une quelconque des revendications 1 à 7, **caractérisé en ce que** le résonateur mécanique (5) a une longueur I et peut être mis en résonance avec la longueur d'onde λ par une vibration longitudinale orientée le long de la longueur I, le résonateur mécanique (5) ayant une section transversale constante le long d'au moins 80 % de sa longueur ou le résonateur mécanique ayant deux sections avec des sections transversales différentes qui ont chacune une section transversale constante le long d'au moins 35 % de la longueur I.

9. Système vibrant à ultrasons (1) selon l'une quelconque des revendications 1 à 8, **caractérisé en ce que** le résonateur mécanique (5) a une surface de section transversale ayant une symétrie de rotation, la surface de section transversale étant de manière préférée circulaire.

10. Système vibrant à ultrasons (1) selon la revendication 9, **caractérisé en ce que** le résonateur mécanique (5) a la forme d'un cylindre.

11. Système vibrant à ultrasons selon l'une quelconque des revendications 1 à 10, **caractérisé en ce que** le résonateur mécanique (5) comprend une surface de section transversale moyenne Q et une longueur I, avec *Q > 0,5l²,* de manière préférée *Q > l²* et de la manière la plus préférée *Q > 1,5l².*

12. Système vibrant à ultrasons selon la revendication 11, **caractérisé en ce que** *Q < 5l²,* de manière préférée *Q < 3l²* et de la manière la plus préférée *Q < 2l².*

13. Système vibrant à ultrasons (1) selon l'une quelconque des revendications 1 à 12, **caractérisé en ce que** le convertisseur est réalisé sous la forme d'un résonateur mécanique.

14. Utilisation d'un système vibrant à ultrasons (1) selon l'une quelconque des revendications précédentes pour souder du métal.
